## Europäisches Patentamt
## European Patent Office
## Office européen des brevets

(19)

(11) Veröffentlichungsnummer: **0 037 467**
**B1**

(12) **EUROPÄISCHE PATENTSCHRIFT**

(45) Veröffentlichungstag der Patentschrift: **09.01.85**

(51) Int. Cl.[4]: **G 11 B 5/84**

(21) Anmeldenummer: **81101738.3**

(22) Anmeldetag: **10.03.81**

(54) **Magnetisierungseinrichtung zur Erzeugung einer magnetischen Vorzugsrichtung in magnetischen Aufzeichnungsträgern.**

(30) Priorität: **21.03.80 DE 3010873**

(43) Veröffentlichungstag der Anmeldung:
**14.10.81 Patentblatt 81/41**

(45) Bekanntmachung des Hinweises auf die
Patenterteilung:
**09.01.85 Patentblatt 85/02**

(84) Benannte Vertragsstaaten:
**DE FR GB IT NL**

(56) Entgegenhaltungen:
**DE-A-2 444 971**
**FR-A-2 162 608**
**FR-A-2 283 504**
**FR-A-2 320 621**
**US-A-4 043 297**

**Die Akte enthält technische Angaben, die nach
dem Eingang der Anmeldung eingereicht
wurden und die nicht in dieser Patentschrift
enthalten sind.**

(73) Patentinhaber: **BASF Aktiengesellschaft
Carl-Bosch-Strasse 38
D-6700 Ludwigshafen (DE)**

(72) Erfinder: **Koester, Eberhard, Dr.
Max-Slevogt-Strasse 23
D-6710 Frankenthal (DE)**
Erfinder: **Deigner, Paul, Dr.
In der Leimengrube 7
D-7601 Willstaett (DE)**
Erfinder: **Schaefer, Dieter, Dr.
Haupstrasse 173
D-6731 Lindenberg (DE)**
Erfinder: **Uhl, Karl, Dr.
Pierstrasse 8B
D-6710 Frankenthal (DE)**
Erfinder: **Falk, Roland, Dr.
Hohbuehl 51
D-7590 Achern (DE)**

EP 0 037 467 B1

Courier Press, Leamington Spa, England.

## Beschreibung

Die Erfindung betrifft eine Magnetisierungseinrichtung zur Erzeugung einer magnetischen Vorzugsrichtung in magnetischen Aufzeichnungsträgern, welche durch Auftragen einer Schicht von in einer Lösung eines organischen Bindemittelsystems und üblichen Zusatzstoffen feinverteilten anisotropen magnetischen Teilchen auf ein unmagnetisches Trägermaterial und anschließendes Verfestigen der Beschichtung erhalten werden, durch Einwirken der magnetischen Felder zweier symetrisch und spiegelbildlich zur Ebene der noch flüssigen Beschichtung angeordneter, dei Polschuhe aufweisender, E-förmiger Elektromagnete.

Zur Herstellung schichtförmiger magnetischer Aufzeichnungsträger werden magnetisch anisotrope magnetische Teilchen, dispergiert in einem Bindemittelsystem, in Form dieser Dispersion auf ein Trägermaterial aufgebracht und das Bindemittel verfestigt. Diese bekannten Verfahren beinhalten meist die einachsige Ausrichtung der magnetisch anisotropen Teilchen mit Hilfe eines entsprechend gestalteten Magnetfeldes parallel zu dem bei der Benutzung des Aufzeichnungsträgers vorgesehenen Aufzeichnungsfeld. Aus der US—PS 2 711 901 ist bekannt, eine zur Ebene des Trägermaterials symetrische Anordnung gleichnamiger magnetischer Pole zu benutzen, um ein zur Trägerebene paralleles magnetisches Feld zu erzeugen. Andere bekanntgewordene Einrichtungen bestehen aus Magneten, die Luftspalte bildende Polschuhe mit der Magnetischicht zugewandten Flächen aufweisen (GB—PS 877 633, US—PS 3 162 792). Alle diese Anordnungen haben jedoch den Nachteil, daß an ihren von den Luftspalten abgewandten Seiten, d.h. im Bereich der äußeren Kanten der beiden Polschuhe des Magneten, bezogen auf die Bandoberfläche ein dem eigentlichen Richtfeld entgegengesetztes Feld auftritt. Durch dieses Gegenfeld wird die Orientierung der Teilchen teilweise wieder aufgehoben, wodurch die magnetische Vorzugsrichtung und damit die Qualität der Aufzeichnungsmedien vermindert wird. Auch drei Polschuhe aufweisende Ausrichtmagneten, wie sie in der US—PS 4 043 297 beschreiben sind, weisen diesen Nachteil auf. Die an den außenliegenden Kanten der beiden äußeren Polschuhe des Magneten auftretenden, dem Richtfeld im Innern der Einheit entgegengesetzten geringen Magnetfelder verringern die erreichte Orientierung der magnetischen Teilchen in der Magnetschicht. Während zur Ausrichtung der anisotropen magnetischen Teilchen in der Dispersionsschicht magnetische Felder erforderlich sind, welche größer als die sogenannten Schaltfeldstärken der einzelnen Teilchen sind, reichen für das Herausdrehen einzelner Teilchen aus der Orientierungsrichtung bereits geringe Störfelder. Im Falle des üblicherweise eingesetzten Gamma-

Eisen (III) oxids kommen Richtfelder von etwa 120 kA/m zur Anwendung. Eine auf diese Weise erhaltene Ausrichtung kann, wie bereits bekannt, schon durch Störfelder in der Größenordnung von 7 kA/m weitgehend aufgehoben werden.

Es hat daher nicht an Versuchen gefehlt, Magnetanordnung zu entwickeln, welche dieses Störfeld nicht aufweisen. So beschreibt die DE—OS 24 44 971 eine Vorrichtung zur Verbesserung der Ausrichtung bei Magnetbändern, wobei nach dem eigentlichen Richtmagnet noch mehrere Korrekturmagnete mit einander gegenüberstehenden gleichnamigen Polen angeordnet sind. In der US—PS 3 117 065 werden zur Ausrichtung der magnetischen Teilchen bei der Herstellung von Aufzeichnungsträgern Magnete mit Polschuhen eingesetzt, welche an ihren von den Luftspalten abgewandten, zu den Luftspalten parallelen Seiten der Beschichtung naheliegende Ansätze aufweisen, die so ausgebildet sind, daß sich die Abstände ihrer der Beschichtung zugewandten Flächen mit zunehmender Entfernung von Luftspalt vergrößern. Diese Vorrichtungen erfordern jedoch einen zusätzlichen apparativen Aufwand.

Es bestand daher die Aufgabe, Magnetisierungseinrichtungen zur Erzeugung einer magnetischen Vorzugsrichtung in magnetischen Aufzeichnungsträgern, welche eine anisotrope magnetische Teilchen enthaltende Schicht aufweisen, bereitzustellen, welche auf einfache Weise ein Richtfeld ohne die Ausrichtung wieder störende entgegengesetzte Felder erzeugen.

Es wurde nun gefunden, daß mit einer Magnetisierungseinrichtung zur Erzeugung einer magnetischen Vorzugsrichtung in magnetischen Aufzeichnungsträgern, welche durch Auftragen einer Schicht von in einer Lösung eines organischen Bindemittelsystems und üblichen Zusatzstoffen feinverteilten anisotropen magnetischen Teilchen auf ein unmagnetisches Trägermaterial und anschließendes Verfestigen der Beschichtung erhalten werden, durch Einwirken der magnetischen Felder zweier symmetrisch und spiegelbildlich zür Ebene der noch flüssigen Beschichtung angeordneter, drei Polschuhe aufweisender, E-förmiger Elektromagnete sich die gestellte Aufgabe lösen läßt, wenn die der Ebene des Aufzeichnungsträgers zugewandten Flächen der drei gleich langen Polschuhe eines jeden Elektromagneten in einer Ebene und parallel zur Ebene des Aufzeichnungsträgers angeordnet sind und die Wicklung jeweils am mittleren Schenkel der beiden E-förmigen Magneten angebracht ist.

Mit der erfindungsgemäßen Magnetisierungseinrichtung ist es möglich, auf einfache Weise die Vertikalkomponente des Richtfeldes senkrecht zur Magnetschichtoberfläche, welche die resultierende Ausrichtung der anisotropen magnetischen Teilchen stört, zu beseitigen und in der Magnetschichtoberfläche auftretende, dem Richtfeld entgegengesetzte Felder zu verhindern.

Die Erfindung sei anhand der Abbildungen näher erläutert:

Fig. 1 zeigt einen Schnitt durch die erfindungsgemäße Magnetisierungseinrichtung.

Fig. 2 gibt den Feldverlauf des mit einer Einrichtung gemäß Fig. 1 in der Ebene der Magnetschicht erhaltenen Richtfeldes wieder.

Fig. 3 zeigt einen Schnitt durch eine Magnetisierungseinrichtung nach dem Stand der Technik.

Fig. 4 gibt ein Feldverlauf der mit einer Einrichtung gemäß Fig. 3 in der Ebene der Magnetschicht erhaltenen Richtfeldes wieder.

Gemäß der Erfindung wird eine auf das Trägermaterial 1 aufgebrachte, magnetisch anisotrope Teilchen enthaltende Dispersionsschicht 2 in der Ebene zwischen den beiden Elektromagneten 3 und 3' in Richtung x hindurchgeführt. Die jeweils drei Schenkel der E-förmigen Magneten tragen an ihren Enden Polschuhe, die derart zusammengeführt sind, daß sich jeweils zwei Luftspalte 4 und 5 bzw. 4' und 5' bilden, deren Flächen sich parallel zur Ebene der Beschichtung ausdehnen. Die Feldspulen 6 und 6' befinden sich erfindungsgemäß nur an dem mittleren Schenkel der E-förmigen Magnete. Sie sind so gepolt, daß die jeweils gegenüberliegenden Pole der beiden Magnete 3 und 3' gleichnamig sind.

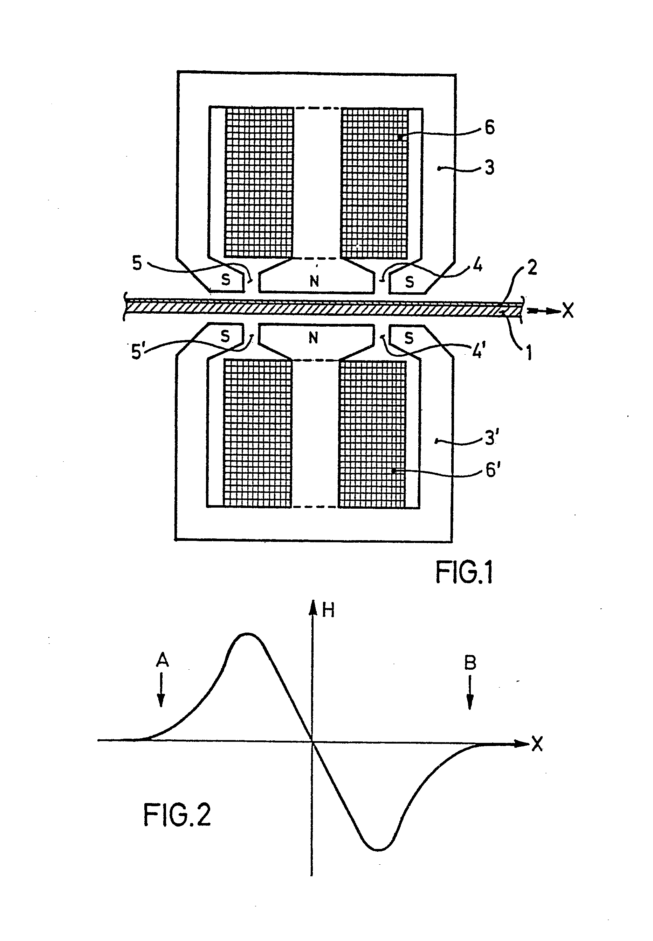

Das mit Hilfe der erfindungsgemäßen Magnetisierungseinrichtung erzeugte Magnetfeld zeigt Figur 2. Hierbei ist der Feldstärkeverlauf in der Ebene zwischen den beiden E-förmigen Magneten, in der sich die Dispersionsschicht mit den auszurichtenden magnetischen Teilchen befindet, in Abhängigkeit von der Bewegungsrichtung x des Trägermaterials mit der Magnetschicht wiedergegeben.

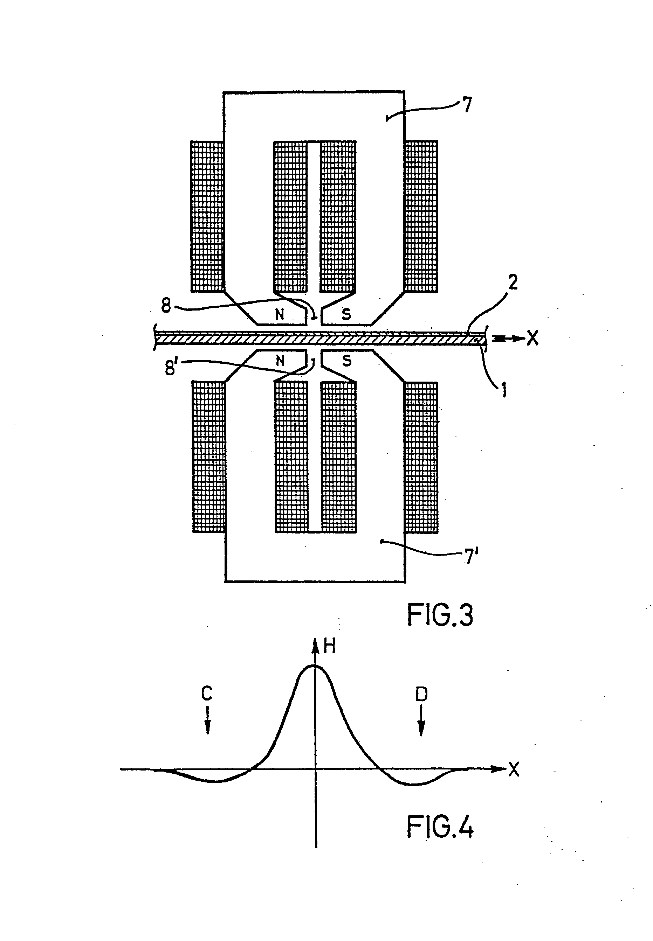

Zur Verdeutlichung der überraschenden Wirkung der erfindungsgemäßen Einrichtung ist in Figur 3 ein an sich bekannter Elektromagnet und in Figur 4 der damit erzielte Feldstärkeverlauf in Abhängigkeit von der Richtung x dargestellt. Gemäß Figur 3 wird das Trägermaterial 1 mit einer anisotropen magnetischen Teilchen enthaltenden Dispersionsschicht 2 ebenfalls in der Ebene zwischen den beiden Magneten 7 und 7' in Richtung x an den beiden Luftspalten 8 und 8' entlanggeführt. Das dabei auf die magnetischen Teilchen einwirkende Magnetfeld ist in Stärke und Richtung in Figur 4 gezeigt.

Die vorteilhafte Ausgestaltung der erfindungsgemäßen Magnetisierungseinrichtung zeigt sich beim Vergleich der Figuren 2 und 4. Beim Feldverlauf, wie er in Figur 2 dargestellt ist, werden die anisotropen magnetischen Teilchen an den Enden der von den Luftspalten abgewandten, zu den Luftspalten parallelen Seiten einen gleichmäßig ansteigenden (A) bzw. auslaufenden (B) Magnetfeld unterworfen. Für die endgültige Ausrichtung der magnetischen Teilchen in der Dispersionsschicht und damit in der nach dem Verfestigen sich ergebenden Magnetschicht ist bekanntermaßen nicht nur, bis zu einem gewissen Grenzwert, das maximale Magnetfeld verantwortlich, sondern auch der Feldverlauf im Bereich des Auslaufens der Dispersionsschicht aus der Magnetisierungseinrichtung, d.h. im Bereich B. Wie Figur 2 nun verdeutlicht, verringert sich bei der erfindungsgemäßen Magnetisierungseinrichtung das ausrichtende Magnetfeld bezüglich der sich entfernenden Dispersionsschicht gleichmäßig gegen Null.

Im Gegensatz hierzu tritt bei der entsprechenden Magnetisierungseinrichtung nach dem Stand der Technik (Figur 3) im auslaufenden Bereich D (Figur 4) ein dem eigentlichen Ausrichtfeld in der Feldrichtung entgegengesetztes Feld auf. Zwar liegt das dem Ausrichtfeld entgegengesetzte Magnetfeld in seinem Betrag nur um 10% des eigentlichen Richtfeldes und ist somit zu klein, um die magnetischen Teilchen umzumagnetisieren, jedoch ist es groß genug, um die Ausrichtung der anisotropen magnetischen Teilchen zu stören.

Mit Hilfe der erfindungsgemäßen Magnetisierungseinrichtung wird es ermöglicht, die Ausrichtung der anisotropen magnetischen Teilchen in der Magnetschicht merkbar zu steigern. So läßt sich, je nach Art des magnetischen Materials und Zusammensetzung der dieses Material enthaltenden Magnetschicht, der sogenannte Richtfaktor um mindestens 25% und bis zu 50% erhöhen. Unter dem Richtfaktor einer Magnetschicht versteht man den Quotienten aus dem remanenten magnetischen Fluß längs zur Orientierungsrichtung und dem remanenten magnetischen Fluß quer dazu.

## Patentanspruch

Magnetisierungseinrichtung zur Erzeugung einer magnetischen Vorzugsrichtung in magnetischen Aufzeichnungsträgern, welche durch Auftragen einer Schicht von in einer Lösung eines organischen Bindemittelsystems und üblichen Zusatzstoffen feinverteilten anisotropen magnetischen Teilchen auf ein unmagnetisches Trägermaterial und anschließendes Verfestigen der Beschichtung erhalten werden, durch Einwirken der magnetischen Felder zweier symmetrisch und spiegelbildlich zur Ebene der noch flüssigen Beschichtung angeordneter, drei Polschuhe aufweisender, E-förmiger Elektromagnete, dadurch gekennzeichnet, daß die der Ebene des Aufzeichnungsträgers zugewandten Flächen der drei gleich langen Polschuhe eines jeden Elektromagneten in einer Ebene und parallel zur Ebene des Aufzeichnungsträgers angeordnet sind und die Wicklung jeweils am mittleren Schenkel der beiden E-förmigen Magneten angebracht ist.

## Claim

A device for magnetically orienting the magnetizable particles of magnetic recording media in a preferred direction, which media are obtained by applying a coating of anisotropically magnetic particles finely dispersed in a solution of an organic binder system and conventional additives to a non-magnetic base, and subsequently solidifying the coating, by the action, on the still fluid coating, of the magnetic fields produced by two E-shaped electromagnets which are arranged symmetrically with respect to, and in mirror-image relationship to, the plane of the said coating, and each of which has three pole shoes, wherein the surfaces of the three equally long pole shoes of each electromagnet, which face the coated base, are arranged in one plane and parallel to the plane of the coated base, and the coils are wound on the middle legs of the two E-shaped magnets.

## Revendication

Dispositif de magnétisation pour obtenir une orientation magnétique préférentielle dans des supports d'enregistrement magnétiques, qui sont obtenus par application, sur un matériau support non magnétique, d'une couche de particules magnétiques, anisotropes, finement réparties dans une solution d'un système de liant organique et d'additifs usuels, puis solidification du revêtement, par action du champ magnétique de deux électro-aimants en E, possédant trois pièces polaires, et disposés symétriquement par rapport au plan du revêtement encore fluide, caractérisé par le fait que les faces, tournées vers le plan du support d'enregistrement, des trois pièces polaires de même longueur de chacun des électro-aimants sont situées dans un même plan, parallèle au plan du support d'enregistrement, et l'enroulement est porté par la branche médiane de chacun des deux aimants en E.

FIG.1

FIG.2

FIG.3

FIG.4